## Europäisches Patentamt
## European Patent Office
## Office européen des brevets

(19)

(11) Numéro de publication: **0 059 128 B1**

(12) # FASCICULE DE BREVET EUROPEEN

(45) Date de publication du fascicule du brevet:
31.07.85

(51) Int. Cl.⁴: **F 16 D 55/224**

(21) Numéro de dépôt: **82400188.7**

(22) Date de dépôt: **04.02.82**

(54) **Ressort pour frein à disque.**

(30) Priorité: **19.02.81 FR 8103268**

(43) Date de publication de la demande:
**01.09.82 Bulletin 82/35**

(45) Mention de la délivrance du brevet:
**31.07.85 Bulletin 85/31**

(84) Etats contractants désignés:
**DE FR GB IT SE**

(56) Documents cités:
**DE - A - 1 927 459**
**DE - A - 2 049 035**
**DE - A - 2 114 812**
**DE - A - 2 345 733**
**DE - A - 2 514 383**
**DE - A - 2 713 360**
**GB - A - 2 046 855**
**GB - A - 2 056 601**

(73) Titulaire: **SOCIETE ANONYME D.B.A., Centre Paris Pleyel, F-93521 St-Denis Cédex 01 (FR)**

(72) Inventeur: **Courbot, Pierre, 1 bis, rue d'Hérivaux, F-95400 Villiers-le Bel (FR)**

(74) Mandataire: **Poidatz, Emmanuel et al, Service Brevets Bendix 44 rue François 1er, F-75008 Paris (FR)**

BUNDESDRUCKEREI BERLIN

## Description

L'invention a pour objet un ressort pour frein à disque à étrier coulissant ainsi qu'un frein à disque équipé d'un tel ressort.

L'invention vise plus particulièrement un ressort à fonctions multiples destiné à équiper un frein à disque dont l'étrier coulisse par rapport à un support fixe au moyen d'au moins deux surfaces comprémentaires de coulissement axial formées sur l'étrier et sur le support fixe et qui sont maintenues en contact par des moyens élastiques.

Parmi les freins à disque du type mentionné ci-dessus, on distingue deux familles principales: premièrement, les freins à disques dont l'étrier est monté coulissant par rapport au support fixe au moyen d'une colonnette axiale reçue en coulissement dans un alésage correspondant et au moyen de deux surfaces de coulissement formées en vis-à-vis sur l'étrier et sur le support fixe. Un tel frein est décrit et représenté dans le brevet GB-A-1 532 572. Dans un tel frein il est nécessaire de prévoir des moyens élastiques pour maintenir lesdites surfaces en contact ainsi que des ressorts antibruits destinés à plaquer les organes de friction en appui dans l'ouverture prévue dans le support fixe pour les recevoir. On a déjà proposé dans le document (EP-A-0 030 502) d'utiliser un ressort unique disposé entre l'étrier et les organes de friction assurant la double fonction de maintien en contact desdites surfaces de coulissement et de ressort anti-bruit pour les organes de friction.

Deuxièment, les freins à disque dont l'étrier est monté coulissant sur le support fixe au moyen de deux paires de surfaces de coulissement complémentaires formées respectivement sur l'étrier et sur le support fixe, lesdites paires de surfaces de coulissement étant maintenues en contact au moyen de deux ressorts disposés de part et d'autre du plan axial médian du frein. Un tel frein est décrit et représenté dans le brevet français FR-A-2 408 766. Dans un tel frein il est de plus nécessaire de prévoir des ressorts antibruit pour les organes de friction afin de plaquer ces derniers en appui dans l'ouverture du support fixe dans laquelle ils sont reçus.

Dans les deux familles de freins qui viennent d'être décrits, il peut être souhaitable de monter un type particulier d'organes de friction auxquels il est nécessaire d'appliquer un effort tangentiel permanent, sollicitant ce organes de friction en appui dans l'ouverture du support fixe dans une position latérale préférentielle. Un tel type d'organes de friction est décrit et représenté dans le document EP-A-0 002 399. Cette dernière demande de brevet européen montre notamment l'utilisation de tels organes de friction appliquée à un frein appartenant à la deuxième famille décrite ci-dessus. On constate à la lecture de ce document qu'il est nécessaire de prévoir pour chacun des organes de friction un ressort indépendant sollicitant chaque organe dans sa position latérale préférentielle ainsi que les deux ressorts de maintien d'étrier mentionnés plus haut.

La demande de modèle d'utilité japonais No. 54/088653 U publiée le 21 janvier 1981 sous le numero JP-U-56-7130 (et correspondant au document GB-A-2 056 601) décrit un ressort pour frein à disque monté dans un logement sous la voûte de l'étrier et coopérant avec les organes de friction pour solliciter ceux-ci radialement et tangentiellement afin d'assurer leur maintien dans une position latérale préférentielle. Dans ce document représentant le préambule de la revendication 1, le ressort présente une forme générale de »V« très ouvert à rebords d'extrémités et est arc-bouté latéralement contre deux parois opposées du logement de voûte. Cet agencement se révèle donc sensible aux variations des dimensionnements du ressort et du logement de voûte ainsi qu'aux variations de tolérances des positions respectives des organes de friction et de l'étrier.

Le problème technique de la présente invention est de proposer un agencement de frein à disque avec un ressort assurant les fonctions de ressort antibruit et de maintien en position latérale préférentielle des organes de friction, de structure simplifiée, compacte et robuste, peu sensible aux problèmes de tolérances et assurant une action élastique améliorée sur les organes de friction.

Ce problème est résdu conformément à l'invention, par un frein à disque du type comportant un étrier monté coulissant parallèlement à l'axe d'un disque tournant sur un support fixe au moyen d'au moins deux surfaces de coulissement axial formées sur l'étrier et sur le support fixe et maintenues élastiquement en contact, et deux organes de friction reçus en ancrage et en coulissement axial dans une ouverture du support fixe pour venir en engagement de friction avec les faces opposées du disque lors de l'actionnement d'un moteur de frein, et un ressort monté élastiquement dans une ouverture formée dans la voûte de l'étrier et exerçant sur les plaques support des organes de friction un effort radial dirigé sensiblement selon un rayon du disque et en direction de l'axe de ce dernier et un effort tangentiel perpendiculaire audit effort radial pour solliciter chacun des organes de friction tangentiellement à la circonférence du disque pour assurer le maintien de ces derniers dans une position latérale préférentielle, le ressort étant constitué d'une lame métallique pliée comportant deux bras principaux reliés par un pli central et présentant en section la forme générale d'un »V« dont les branches sont constituées par lesdits bras principaux, ces derniers coopérant avec deux surfaces d'appui sensiblement planes formées sur l'étrier et s'étendant parallèlement à l'axe du disque, chacune des plaques support des organes de friction comportant un angle d'appui formé sur un ergot disposé sur la partie supérieure des plaques support et par la face supérieure de cette dernière, le pli central

prenant appui dans ledit angle d'appui pour exercer sur ces derniers un effort élastique composé dutit effort radial et dudit effort tangentiel, les deux surfaces d'appui sont formées dans une cheminée de la voûte de l'étrier pour constituer latéralement, dans cette cheminée, un coin d'angle supérieur à l'angle au repos des bras principaux engagés élastiquement en écartement et à coulissement par leurs extrémités respectives opposées au pli central sur les surfaces d'appui.

Avec un tel agencement, l'action élastique du ressort résulte de son montage à écartement par effet de coin sur les surfaces d'appui, un déplacement des organes de friction antagoniste à cette action élastique augmentant cet effet de coin et, partant, l'action élastique du ressort.

Selon une réalisation de l'invention, le ressort comporte en outre un bras d'accrochage s'étendant depuis ledit pli central pour venir coopérer avec une surface d'accrochage formée dans l'ouverture de la voûte d'étrier en vis-à-vis des surfaces d'appui.

Avec un tel agencement, le ressort peut être maintenu élastiquement dans l'ouverture de l'étrier, le bras d'accrochage augmentant l'effet de coin appliqué aux bras principaux et, partant, l'action élastique du ressort. Des modes de réalisations additionnels font l'objet des Sous-revendications.

On décrira maintenant à tire d'exemple un ressort réalisé selon les enseignements de la présente invention ainsi que son application à deux freins à disque d'un type différent, en se référant aux dessins annexés, dans lesquels:

la figure 1 représente un premier frein à disque muni d'un ressort réalisé selon la présente invention;

la figure 2 est une vue en coupe partielle selon la ligne 2-2 de la figure 1;

la figure 3 est une vue en coupe selon la ligne 3-3 de la figure 1;

la figure 4 représente en coupe partielle un second frein à disque équipé d'un ressort réalisé selon la présente invention;

la figure 5 est une vue agrandie d'un détail de la figure 2 représentant l'implantation dur essort dans la voûte de l'étrier du frein à disque;

la figure 6 est une vue latérale du ressort selon la présente invention;

la figure 7 est une vue selon la flèche A de la figure 6;

la figure 8 est une vue selon la flèche B de la figure 6;

la figure 9 est une vue théorique développée du ressort de la figure 6.

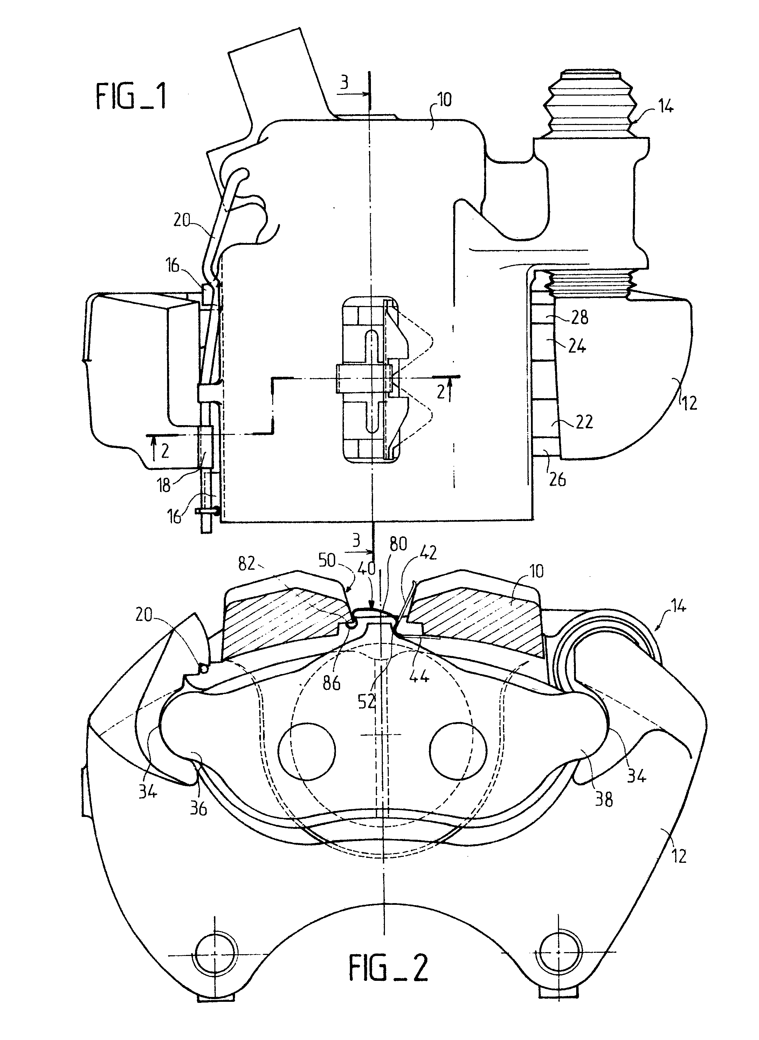

Le frein à disque représenté aux figures 1 à 3 est du type comportant un étrier 10 monté coulissant sur un support fixe 12 au moyen d'une colonnette axiale 14. Le coulissement de l'étrier 10 par rapport au support fixe 12 est également assuré au moyen de surfaces de coulissement axial 16 et 18, formées respectivement sur l'étrier 10 et le support fixe 12, entre lesquelles est interposé, dans le mode de réalisation représenté, un élément de verrouillage en fil métallique 20. Le frein à disque comporte en outre deux organes de friction 22 et 24 munis respectivement de plaques support 26 et 28, susceptibles de venir en engagement de friction avec un disque tournant 30 lors de l'actionnement d'un moteur hydraulique de frein 32. Les organes de friction 22 et 24 sont reçus en ancrage et en coulissement dans une ouverture 34 formée dans le support fixe 12. Dans l'exemple représente, les deux organes de friction 22 et 24 ont des extrémités 36 et 38 possédant un profil circulaire coopérant avec des profils circulaires complémentaires de l'ouverture 34. Un tel type d'organes de friction est décrit et représenté plus en détail dans la demande de brevet européen publiée sous le No. 0 002 399. Pour ce type d'organes de friction il est souhaitable d'exercer sur la plaque support un effort tangentiel qui maintienne cette dernière dans une position latérale préférentielle en appui dans l'ouverture ménagée dans le support fixe 12.

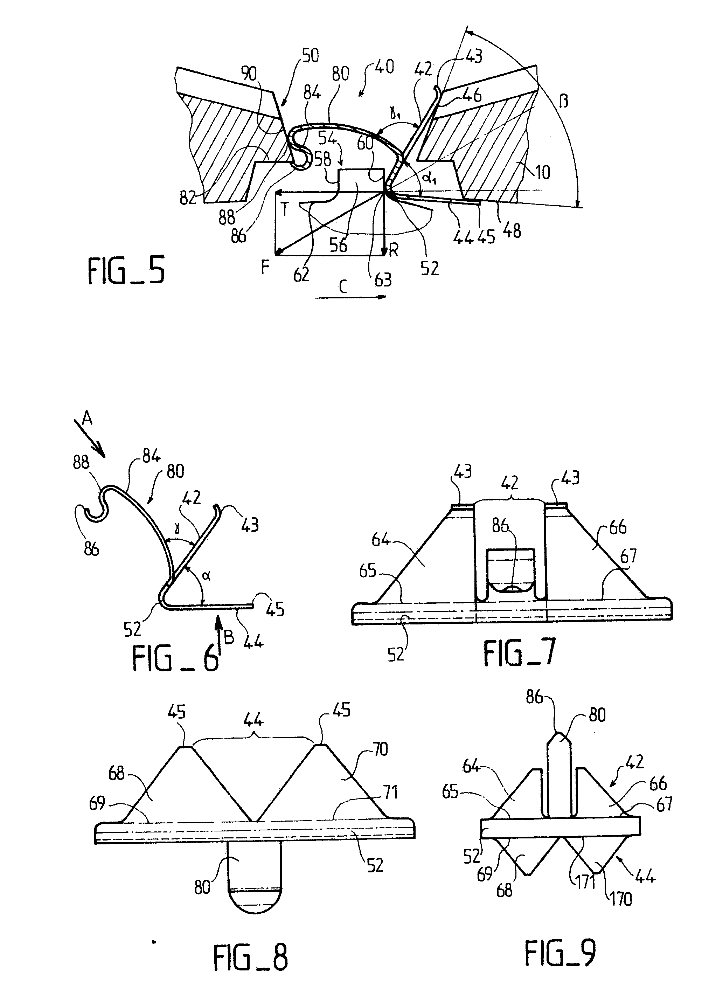

Le frein à disque représenté aux Figures 1 à 3 est muni d'un ressort 40 réalisé selon la présente invention. Pour la description du ressort 40 on se reportera notamment aux Figures 5 à 9. Le ressort 40 est constitué d'une lame métallique pliée qui comprend deux bras principaux 42 et 44, et qui présentent en section par un plan perpendiculaire à l'axe du frein la forme d'un »V«. Les branches du »V« sont constituées par lesdits bras principaux 42 et 44 qui forment entre eux un angle $\alpha$. Comme on peut le constater à la Figure 5, les bras principaux du ressort 40 coopèrent avec deux surfaces 46 et 48 formées dans une ouverture 50 de la voûte de l'étrier 10. Les surfaces 46 et 48 de l'ouverture 50 sont sensiblement planes et s'étendent parallèlement à l'axe du disque 30 et forment entre elles un angle $\beta$. Un pli central 52 du ressort 40 relie les bras principaux 42 et 44 et s'étend parallèlement à l'axe du disque 30 et constitue le sommet dudit »V«. Lorsque le ressort 40 est installé dans la voûte de l'étrier 10 et que ce dernier occupe, par rapport au support fixe 12, sa position normale de fonctionnement, le pli central 52 du ressort coopère avec la partie supérieure 54 de chacune des plaques support 26 et 28 des organes de friction 22 et 24. La partie supérieure 54 des plaques support est munie d'un ergot 56 s'étendant radialement vers l'extérieur et comportant des bords latéraux 58 et 60. Chacun des bords latéraux 58 et 60 forment avec la face supérieure 62 de la plaque support de l'organe de friction un angle d'appui 63 pour le ressort 40. Dans l'exemple représenté et notamment à la Figure 5, le pli central du ressort 40 est reçu en appui dans l'angle 63 constitué par la face latérale 60 et l'ergot 56 et la face supérieure 62 de la plaque support de l'organe de friction. Lorsque le ressort 40 est installé dans l'étrier 10 et que celui-ci occupe sa position normale de fonctionnement représenté à la Figure 5, les deux surfaces 46 et 48 formées dans l'ouverture 50 de la voûte de l'étrier 10, coopèrent avec les bras principaux 42 et 44 du ressort 40 et agissent entre ces derniers comme un coin tendant à écarter les bras 42 et 44.

Comme on peut le constater à la Figure 5 l'angle $\alpha_1$ séparant les bras 42 et 44 du ressort 40 est supérieur à l'angle $\alpha$ séparant les bras du ressort lorsque ce dernier n'est pas installé et tel qu'il est représenté à la Figure 6. L'effet de coin provoqué par l'introduction du coin constitué par les surfaces 46 et 48 qui forment entre elles un angle $\beta$ supérieur à la valeur initiale $\alpha$ de l'angle du »V« provoque une action élastique $\vec{F}$ du ressort 40 sur la plaque support de chacun des organes de friction dont la direction est sensiblement celle de la bissectrice de l'angle $\alpha_1$. Comme on peut le constater à la Figure 5 le ressort 40 applique l'effort $\vec{F}$ à la plaque support de chacun des organes de friction dans l'angle d'appui formé par la face latérale 60 de l'ergot 56 et la face supérieure 62 de la plaque support. On peut décomposer l'effort élastique $\vec{F}$ exercé par le ressort 40 en un effort radial $\vec{R}$ dirigé sensiblement selon un rayon du disque 30 et en direction de l'axe de rotation de ce dernier, et en un effort tangentiel $\vec{T}$ perpendiculaire à l'effort $\vec{R}$. L'effort tangentiel $\vec{T}$ sollicite chacun des organes de friction tangentiellement à la circonférence du disque et assure le maintien de ces derniers dans une position latérale préférentielle dans laquelle l'extrémité arrondie 36 de la plaque support (voir Figure 2) est maintenue en appui latéral dans l'ouverture 34 formée dans le support fixe 12. L'effort radial $\vec{R}$ appliqué à chacune des plaques support des organes de friction sollicite ces derniers radialement vers l'axe du disque et maintient les deux extrémités arrondies des plaques support des organes de friction en appui radial interne dans l'ouverture 34 du support 12. Par réaction, le ressort 40 sollicite élastiquement l'étrier 10 radialement vers l'extérieur, c'est-à-dire dans une direction tendant à faire pivoter l'étrier 10 autour de la colonnette 14 dans le sens des aiguilles d'une montre lorsque l'on regarde la Figure 2; grâce à cette sollicitation, les surfaces de coulissement axial 16 et 18 sont maintenues en contact avec l'élément élastique de fermeture 20.

Les bras principaux du ressort 40 coopèrent avec les surfaces 46 et 48 de la voûte de l'étrier par leurs extrémités respectives 43 et 45. L'extrémité 43 est légèrement recourbée de façon à coopérer avec la surface 46 par une génératrice de cette extrémité recourbée s'étendant sensiblement parallèlement à l'axe du disque. Grâce à cette caractéristique, le ressort 40 est susceptible de glisser sur la face 46 et vers l'extérieur de la voûte lors de la fermeture de l'étrier sur le support fixe par le basculement de celui-ci autour de la colonnette 14, le pivotement du ressort permettant alors l'effacement du pli central 52 du ressort devant les ergots 56 des organes de friction et sa mise en appui dans les angles d'appui 63 des organes de friction. De plus, lors de l'actionnement du frein, les organes de friction se déplacent dans la direction indiquée par la flèche $\vec{C}$ de la Figure 5, c'est-à-dire à l'encontre de l'encontre de l'effort tangentiel T exercé par le ressort 40. Durant ce déplacement, le ressort glisse sur la génératrice mentionnée plus haut, le bras principal 44 glissant également parallèlement à la surface 48 formée sur l'étrier. On comprend que grâce à ces déplacements conjugués, la valeur de l'effort $\vec{F}$ par enfoncement du coin entre les bras 43 et 44 augmente et qu'ainsi l'effort tangentiel élastique de rappel $\vec{T}$ appliqué au patin voit également sa valeur augmentée. Comme on peut le constater aux Figures 7 et 8, les bras principaux 42 et 44 présentent une section qui augmente depuis leurs extrémités respectives 43 et 45 par lesquelles ils coopèrent avec les surfaces 42, 4 formées dans la voûte de l'étrier jusqu'au pli central 52 du ressort 40. La section variable de chacun des bras principaux procurent à ceux-ci une inertie maximum à proximité du pli central du ressort 52 définissant la pointe »V«, pli dans lequel les contraintes sont les plus élevées. La section variable permet par ailleurs d'obtenir une grande flexibilité de chacun des bras principaux 42, 44, cette flexibilité étant obtenue par une inertie minimale à proximité des extrémités 43 et 45. On obtient ainsi un effort élastique $\vec{F}$ exercé par le ressort sur les patins d'une valeur sensiblement constante, quelles que soient les variations de tolérance de la position respective du patin de l'étrier. Le bras principal 42 est, comme on peut le constater à la Figure 7, constitué par deux triangles 64, 66 symétriques par rapport au plan médian du ressort 40, dont les bases 65, 67 sont reliées au pli central 52 du ressort 40 et dont les sommets opposés constituent ladite extrémité recoubée 43 du bras principal 42. Le bras principal 44 est constitué de deux triangles 68, 70 symétriques par rapport au plan médian du ressort 40, dont les bases 69, 71, sont reliées au pli central 52 du ressort 40 et dont les sommets opposés constituent ladite extrémité d'appui 45 du ressort 40 sur la surface 48 de l'étrier. On comprend que grâce à ces formes particulières, les bras 42 et 44 possèdent une inertie moyenne minimum inférieure à l'inertie qu'auraient des bras 42 et 44 de forme rectangulaire.

Le ressort 40 est muni d'un bras d'accrochage 80 qui permet d'assurer la fixation du ressort 40 dans l'ouverture 50 formée dans la voûte de l'étrier 10. Dans le mode de réalisation représenté, le bras d'accrochage 80 s'étend entre les triangles 64 et 66 depuis le pli central 52 du ressort 40. Le bras d'accrochage 80 forme avec le bras principal 42 un angle $\gamma$ et s'étend en éloignement de ce dernier pour venir coopérer avec une surface d'accrochage 82 formée dans l'ouverture 50 en vis à vis des surfaces 46 et 48. Le bras 80 coopère avec la surface d'accrochage 82 par son extrémité libre 84 sur laquelle est formée un crochet 86.

Comme on peut le constater à la Figure 5, lorsque le ressort 40 est installé dans l'ouverture 50, le bras d'accrochage 80 forme avec le bras principal 42 un angle $\gamma_1$ de valeur supérieure à l'angle au repos. On comprend qu'ainsi le crochet 86 coopère élastiquement avec la surface 82 et que le ressort 40 maintenu élastiquement dans l'ouverture 50.

Le bras 80 participe également à l'action élastique $\vec{F}$ exercée par le ressort 40 sur les organes de friction. En effet, la portion 88 de l'extrémité 84 du bras d'accrochage 80 prend appui sur une surface d'appui 90 formée dans l'ouverture 50 et exerce sur le pli central 52 du ressort un effort élastique augmentant l'effet de coin appliqué aux bras principaux 42 et 44.

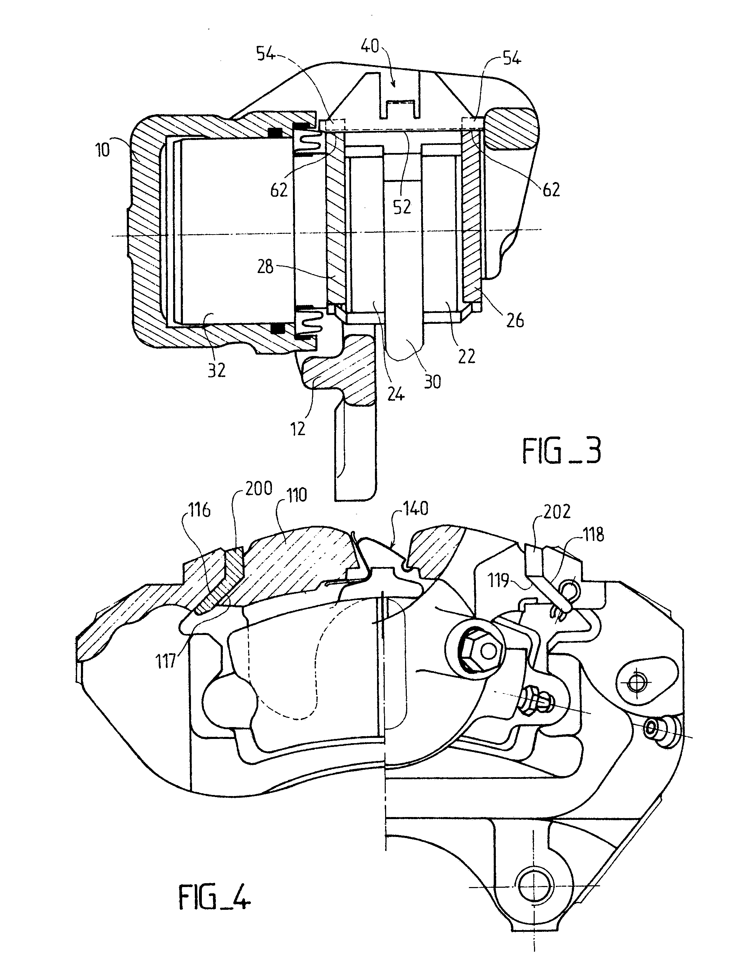

On a représenté à la Figure 4 un frein à disque du type de celui décrit dans le document EP-A-0 002 399 dans lequel un étrier 110 est monté coulissant sur un support fixe 112 au moyen de deux paires de surfaces de coulissement complémentaires 116, 118, et 117, 119 formées sur le support Fixe 112 et sur l'étrier 110.

Deux clavettes de coulissement 200 et 202 sont interposées entre les surfaces 116, 117 et 118, 119 respectivement. Le frein à disque représenté à la Figure 4 est muni d'un ressort 140 en tout point identique au ressort 40 qui vien d'être décrit. Le ressort 40 assure le maintien en contact des surfaces des coulissement axial et a sur les organes de friction la double action élastique mentionnée plus haut. On constate que grâce à l'utilisation du ressort 140 on a pu supprimer l'emploi des deux ressorts d'étrier et des deux ressorts d'organes e friction habituellement utilisés dans ce type de frein.

## Revendications

1. Frein à disque, du type comportant un étrier (10, 110) monté coulissant parallèlement à l'axe d'un disque tournant (30) sur un support fixe (12) au moyen d'au moins deux surfaces (14 et 16, 18; 117, 119 et 116, 118), de coulissement axial formées sur l'étrier et sur le support fixe et maintenues élastiquement en contact, et deux organes de friction (22, 24) reçus en ancrage et en coulissement axial dans une ouverture (34) du support fixe pour venir en engagement de friction avec les faces opposées du disque lors de l'actionnement d'un moteur de frein (32), et un ressort (40, 140) monté élastiquement dans une ouverture formée dans la voûte de l'étrier et exerçant sur les plaques support (26, 28) des organes de friction (22, 24) un effort radial (R), dirigé sensiblement selon un rayon du disque (30) et en direction de l'axe de ce dernier, et un effort tangentiel (T), perpendiculaire audit effort radial (R) pour solliciter chacun des organes de friction (22, 24) tangentiellement à la circonférence du disque pour assurer le maintien de ces derniers dans un position latérale préférentielle, le ressort (40, 140) étant constitué d'une lame métallique pliée comportant deux bras principaux (42, 44), reliés par un pli central (52) et présentant en section la forme générale d'un »V« dont les branches sont constituées par lesdits bras principaux (42, 44), ces derniers coopérant avec deux surfaces d'appui (46, 48) sensiblement planes formées sur l'étrier (10) et s'étendant parallèlement à l'axe du disque (30), chacune des plaques support des organes de friction (22, 23) comportant un angle d'appui (63) formé par un ergot (56) prévu sur la partie supérieure des plaques support (26, 28) et par la face supérieure (62) de cette derniére, le pli central (52) prenant appui dans ledit angle d'appui (63) pour exercer sur ces derniers un effort élastique (F) composé dudit effort radial (R) et dudit effort tangentiel (T), caractérisé en ce que les deux surfaces d'appui (46, 48) sont formées das une cheminée (50) de la voûte de l'étrier (10, 110) pour consituer latéralement, dans cette cheminée, un coin d'angle ($\beta$) supérieur à l'angle ($\alpha$) au repos des bras principaux (42, 44) engagés élastiquement en écartement et à coulissement par leurs extrémités respectives (43, 45) opposées au pli central (52) sur les surfaces d'appui (46, 48).

2. Frein à disque selon la revendication 1, caractérisé en ce que, lorsque le ressort occupe sa position normale de fonctionnement, les bissectrices desdits angles ($\alpha$) et ($\beta$) sont sensiblement confondues, l'effort élastique composé (F) du ressort (40, 140) ayant une direction sensiblement confondue avec ces bissectrices.

3. Frein à disque selon la revendication 1 ou la revendication 2, caractérisé en ce que le ressort (40, 140) comporte en outre un bras d'accrochage (80) s'étendant depuis ledit pli central (52) pour venir coopérer avec une surface d'accrochage (82) formée dans l'ouverture (50) de la voûte d'étrier en vis-à-vis des surfaces d'appui (46, 48).

4. Frein à disque selon la revendication 3, caractérisé en ce que l'extrémité libre (84) du bras d'accrochage (80) est munie d'un crochet (86) coopérant avec la surface d'accrochage (82).

5. Frein à disque selon l'une des revendications précédentes, caractérisé en ce qu'au moins un des bras principaux (42, 44) possède une section augmentant depuis ladite extrémité (43, 45) jusqu'au pli central (52).

6. Frein à disque selon la revendication 5, caractérisé en ce que le bras principal (42, 44) est constitué par deux triangles (64—66, 68, 70) symétriques par rapport au plan médian au ressort et dont les bases (65—67, 69-71) sont reliées au pli central, les sommets des triangles constituant lesdits extrémités (43, 45) des bras principaux.

7. Frein à disque selon la revendication 3 et la revendication 6, caractérisé en ce que le bras d'accrochage (80) est disposé entre les deux triangles (64, 66) du bras principal (42, 44).

8. Frein à disque selon l'un des revendications précédentes, caractérisé en ce que l'étrier (10) est monté coulissant sur le support fixe (12) au moyen d'une colonnette axiale (14) et de deux surfaces de coulissement axial (16, 18) formées sur l'étrier (10) et le support fixe respectivement, le ressort (40) sollicitant élastiquement l'étrier radialement vers l'extérieur pour assurer le maintien en contact desdites surfaces de culissement axial.

9. Frein à disque selon l'une des revendications 1 à 7 caractérisé en ce que l'étrier (110) est monté coulissant sur le support fixe (112) au moyen de deux paires de surfaces de coulissement axial (119—117, 118—116) formées sur l'étrier (110) et le support fixe (112) respectivement, le ressort (140) sollicitant élastiquement l'étrier radialement vers l'extérieur pour assurer le maintien en contact desdites surfaces de coulissement axial.

## Patentansprüche

1. Scheibenbremse mit einem Bremssattel (10, 110), der parallel zur Achse einer umlaufenden Bremsscheibe (30) gleitbar gelagert ist an einem ortsfesten Bremsträger (12) mittels mindestens zweier axialer Gleitflächen (14 und 16, 18; 117, 119 und 116, 118), die am Bremssattel und am Bremsträger gebildet sind und elastisch in Berührung gehalten werden, und zwei Bremsbacken (22, 24), die in einer Öffnung (34) des Bremsträgers verankert und axial gleitend gelagert sind, um bei Betätigung eines Bremsmotors (32) in Reibanlage mit den gegenüberliegenden Stirnseiten der Bremsscheibe zu gelangen, und einer Feder (40, 140), die in einer Öffnung des Steges des Bremssattels elastisch gelagert ist und auf die Belagträgerplatten (26, 28) der Bremsbacken (22, 24) eine im wesentlichen längs eines Radius der Bremsscheibe (30) und in Richtung der Achse der letzteren verlaufende Radialkraft (R) sowie eine auf der Radialkraft (R) senkrecht stehende Tangentialkraft (T) ausübt, und die Bremsbacken (22, 24) tangential zum Umfang der Bremsscheibe vorzuspannen, um die letzteren in einer bevorzugten seitlichen Stellung zu halten, wobei die Feder (40, 140) von einem gefalteten Metallblatt gebildet wird, das zwei durch eine zentrale Falte (52) verbundene Hauptarme (42, 44) aufweist und einen Querschnitt in Form eines »V« hat, dessen Schenkel von den Hauptarmen (42, 44) gebildet werden, wobei die letzteren mit zwei im wesentlichen ebenen Anlageflächen (46, 48) zusammenwirken, die am Bremssattel (10) gebildet sind und sich parallel zur Achse der Bremsscheibe (30) erstrecken, wobei jede Belagträgerplatte der Bremsbacken (22, 23) einen Anlagewinkel (63) aufweist, der von einem am oberen Abschnitt der Belagträgerplatten (26, 28) vorgesehenen Vorsprung (56) und von der Oberseite (62) des oberen Abschnittes der Belagträgerplatten gebildet wird, wobei die zentrale Falte (52) an dem Anlagewinkel (63) angreift, um auf die letzteren eine elastische Kraft (F) auszuüben, die sich aus der besagten Radialkraft (R) und der besagten Tangentialkraft (T) zusammensetzt, dadurch gekennzeichnet, daß die beiden Anlageflächen (46, 48) in einem schachtartigen Durchbruch (50) des Steges des Bremssattels (10, 110) gebildet sind, um seitlich in diesem Durchbruch eine Ecke zu bilden, deren Winkel (β) größer ist als der Ruhewinkel (α) der Hauptarme (42, 44), die mit ihren bezüglich der zentralen Falte (52) gegenüberliegenden entsprechenden Enden (43, 45) unter Spreizung und gleitend an den Anlageflächen (46, 48) elastisch angreifen.

2. Bremsscheibe nach Anspruch 1, dadurch gekennzeichnet, daß in der normalen Betriebsstellung der Feder die Winkelhalbierenden der besagten Winkel (α und β) im wesentlichen zusammenfallen, wobei die zusammengesetzte elastische Kraft (F) der Feder (40, 140) eine Richtung hat, die im wesentlichen mit diesen Winkelhalbierenden zusammenfällt.

3. Bremsscheibe nach Anspruch 1 oder 2, dadurch gekennzeichnet, daß die Feder (40, 140) außerdem einen Haltearm (80) aufweist, der sich von der zentralen Falte (52) wegerstreckt, um mit einer Haltefläche (82) zusammenzuwirken, die in der Öffnung (50) des Bremssattelsteges gegenüber den Anlageflächen (46, 48) gebildet ist.

4. Scheibenbremse nach Anspruch 3, dadurch gekennzeichnet, daß das freie Ende (84) des Haltearms (80) mit einem Haken (86) versehen ist, der mit der Haltefläche (82) zusammenwirkt.

5. Scheibenbremse nach einem der vorhergehenden Ansprüche, dadurch gekennzeichnet, daß mindestens einer der Hauptarme (42, 44) einen Abschnitt aufweist, der sich von dem besagten Ende (43, 45) bis zu zentralen Falte (52) vergrößert.

6. Scheibenbremse nach Anspruch 5, dadurch gekennzeichnet, daß der Hauptarm (42, 44) von zwei Dreiecken (64, 66, 68, 70) gebildet wird, die bezüglich der Mittelebene der Feder symmetrisch sind und deren Grundseiten (65—67, 69—71) mit der zentralen Falte verbunden sind, wobei die Spitzen der Dreiecke die besagten Enden (43, 45) der Hauptarme bilden.

7. Scheibenbremse nach Anspruch 3 und 6, dadurch gekennzeichnet, daß der Haltearm (80) zwischen den beiden Dreiecken (64, 66) des Hauptarmes (42, 44) angeordnet ist.

8. Scheibenbremse nach einem der vorhergehenden Ansprüche, dadurch gekennzeichnet, daß der Bremssattel (10) am Bremsträger (12) gleitbar gelagert ist mittels eines axialen Bolzens (14) und zweier axialer Gleitflächen (16, 18), die am Bremssattel (10) bzw. Bremsträger (12) gebildet sind, wobei die Feder (40) den Bremssattel radial nach außen elastisch vorspannt, um das Aneinanderliegen der axialen Gleitflächen sicherzustellen.

9. Scheibenbremse nach einem der Ansprüche 1—7, dadurch gekennzeichnet, daß der Bremssattel (110) am Bremsträger (112) gleitbar gelagert ist mittels zweier Paare von axialen Gleitflächen (119—117, 118—116), die am Bremssattel (110) bzw. Bremsträger (112) gebildet sind, wobei die Feder (140) den Bremssattel radial nach außen elastisch vorspannt, um das Aneinanderliegen der axialen Gleitflächen sicherzustellen.

## Claims

1. A disc brake of the type comprising a caliper (10, 110) mounted for sliding movement parallel to the axis of a rotating disc (30) on a fixed support (12) by means of at least two axial sliding

surfaces (14 and 16, 18; 17, 19 and 116, 118) formed on the caliper and on the fixed support and resiliently maintained in contact, and two friction elements (22, 24) anchored and axially slidingly received in an opening (34) of the fixed support for movement into frictional engagement with the opposed faces of the disc upon actuation of a brake motor (32), and a spring (40, 140) resiliently mounted in an opening formed in the bridging portion of the caliper and exerting upon the support plates (26, 28) of the friction elements (22, 24) a radial force (R) extending substantially along a radius of the disc (30) and in the direction of the axis of the latter, and a tangential force (T) perpendicular to said radial force (R) for biasing each of the friction elements (22, 24) tangentially to the circumference of the disc to maintain the latters ina preferred lateral position, the spring (40, 140) being constituted by a folded metallic leaf comprising two main arms (42, 44) connected by a central fold (52) and beeing in cross-section of »V« shape with the branches of the »V« being formed by said main arms (42, 44), the latters cooperating with two substantially plain abutment surfaces (46, 48) formed on the caliper (10) and extending parallel to the axis of the disc (30), each of the support plates of the friction elements (22, 23) comprising an abutment angle (63) formed by a projection (56) provided on the upper portion of the support plates (26, 28) and by the upper surface (62) of the latter, the central fold (52) being engaged in said abutment angle (63) for exerting upon the latters a resilient force (F) composed of said radial force (R) and said tangential force (T), characterized in that the two abutment surfaces (46, 48) are formed in a window (50) of the bridging portion of the caliper (10, 110) for laterally forming in said window a corner habing an angle ($\beta$) which is greater than the rest angle ($\alpha$) of the main arms (42, 44) resiliently and slidingly engaging the abutment surfaces (46, 48) by their respective ends (43, 45) opposite the central fold (52) while being spreaded.

2. The disc brake of claim 1, characterized in that, while the spring is in its normal position of operation, the bisecting lines of said angles ($\alpha$ and $\beta$) subsantially coincide, the composed resilient force (F) of the spring (40, 140) having a direction substantially coinciding with said bisecting lines.

3. The disc brake of claim 1 or claim 2, characterized in that the spring (40, 140) further comprises a holding arm (80) extending from said central fold (52) to cooperate with a holding surface (82) formed in the opening (50) of the bridging portion of the caliper oposite the abutment surfaces (46, 48).

4. The disc brake of claim 3, characterized in that the free end (84) of the holding arm (80) is provided with a hook (86) cooperating with the holding surface (82).

5. The disc brake of any of the preceding claims, characterized in that at least one of the main arms (42, 44) has a section increasing from said end (43, 45) to the central fold (52).

6. The disc brake of claim 5, characterized in that the main arm (42,, 44) is comprised of two triangles (64, 66, 68, 70) which are symmetrical with respect to the center plae of the spring and whose bases (65—67, 69—71) are connected to the central fold, the summits of the triangles forming said ends (43, 45) of the main arms.

7. The disc brake according to claim 3 and claim 6, characterized in that the holding arm (80) is disposed between the two triangles (64, 66) of the main arm (42, 44).

8. The disc brake of any of the preceding claims, characterized in that the caliper (10) is slidingly mounted on the fixed support (12) by means of an axial column (14) and two axial sliding surfaces (16, 18) formed on the caliper (10) and the fixed support, respectively, the spring (40) resiliently biasing the caliper radially outwards the maintain said axial sliding surfaces in contact with each other.

9. The disc brake of any of claims 1 to 7, characterized in that the caliper (110) is slidingly mounted on the fixed support (112) by means of two pairs of axial sliding surfaces (119—117, 118—116) formed on the caliper (110) and the fixed support (112), respectively, the spring (140) resiliently biasing the caliper radially outwards to maintain said axial sliding surfaces in contact with each other.

FIG_1

FIG_2

FIG _ 3

FIG _ 4

FIG_5

FIG_6

FIG_7

FIG_8

FIG_9